# EUROPÄISCHE PATENTSCHRIFT

(11) **EP 1 125 184 B1**
(45) Veröffentlichungstag und Bekanntmachung des Hinweises auf die Patenterteilung: **02.01.2003**
(21) Anmeldenummer: 99962042.0
(22) Anmeldetag: 28.10.1999
(51) Int. Cl.: G06F 1/14, G05B 19/05

(54) **NETZWERKTEILNEHMER**
NETWORK SUBSCRIBER STATION
POSTE D'ABONNE DE RESEAU

(30) Priorität: 05.11.1998 DE 29819806 U
(43) Veröffentlichungstag der Anmeldung: 22.08.2001
(73) Patentinhaber: SIEMENS AKTIENGESELLSCHAFT, 80333 München (DE)
(72) Erfinder: EGLE, Fridolin, D-76448 Durmersheim (DE); MÜNCH, Christoph, D-76344 Eggenstein-Leopoldshafen (DE)
(86) Internationale Anmeldenummer: DE9903443
(87) Internationale Veröffentlichungsnummer: WO00028400

(56) Entgegenhaltungen:
- EP-A- 0 613 271
- DE-A- 3 638 947
- DE-A- 4 320 137
- US-A- 5 276 659

## Beschreibung

Die Erfindung betrifft einen Netzwerkteilnehmer, der mit einem weiteren Netzwerkteilnehmer verbindbar ist, wobei in einer Sendebetriebsart der Netzwerkteilnehmer dem weiteren Netzwerkteilnehmer Telegramme zuführt und in einer Empfangsbetriebsart der Netzwerkteilnehmer von dem weiteren Netzwerkteilnehmer Telegramme empfängt und wobei die Telegramme in einer Nachrichtenschlange Nachrichten gleicher Nachrichtenlänge aufweisen, von denen eine Nachricht eine mit einer Uhrzeit versehene Uhrzeitnachricht ist.

Ein derartiger Netzwerkteilnehmer ist aus dem Siemens-Katalog ST 70, Kapitel 12, Ausgabe 1997, bekannt. Dieser Netzwerkteilnehmer ist für einen Einsatz in einem verteilten Automatisierungssystem geeignet, das mehrere Automatisierungskomponenten umfaßt, die zur Steuerung eines technischen Prozesses nach Maßgabe einer Automatisierungsaufgabe synchronisiert werden müssen. Dazu ist vorgesehen, daß ein am Netzwerk angeschlossener Uhrzeitsender zyklisch und per "Broadcasting" oder "Multicasting" eine Uhrzeitnachricht aussendet, die Bestandteil einer mehrere Nachrichten umfassenden Nachrichtenschlange ist. Anhand dieser ausgesendeten Uhrzeitnachricht synchronisieren die Automatisierungskomponenten ihre Uhren. Durch unterschiedliche Verweilzeiten einer Uhrzeitnachricht im Sender und/oder Empfänger des Netzwerkteilnehmers kann es vorkommen, daß die in den Uhrzeitnachrichten hinterlegten Uhrzeiten im Hinblick auf den Sende- und/oder Empfangszeitpunkt in der Sende- und/oder der Empfangsbetriebsart fehlerhaft sind.

Der vorliegenden Erfindung liegt die Aufgabe zugrunde, einen Netzwerkteilnehmer der eingangs genannten Art zu schaffen, in welchem Ungenauigkeiten im Hinblick auf einen Sende- und/oder Weiterverarbeitungszeitpunkt der Uhrzeit weitgehend vermieden werden.

Diese Aufgabe wird durch die im kennzeichnenden Teil des Anspruchs 1 angegebenen Maßnahmen gelöst.

Die Nachrichten in der Nachrichtenschlange werden entsprechend der Reihenfolge ihrer Hinterlegung in dieser Nachrichtenschlange bearbeitet. Die Erfindung geht von der Idee aus, die Zeitverzögerung zu erfassen, welche durch eine verzögerte Verarbeitung der Uhrzeitnachricht innerhalb der Nachrichtenschlange entsteht, und die in der Uhrzeitnachricht hinterlegte Uhrzeit entsprechend zu korrigieren.
Für den Fall, daß der Netzwerkteilnehmer in einer Sendebetriebsart arbeitet, erfassen die Mittel des Netzwerkteilnehmers eine erste Verzögerungszeit vom Zeitpunkt des Eintrags der Uhrzeitnachricht in die Nachrichtenschlange bis zum Zeitpunkt des Sendebeginns dieser Uhrzeitnachricht und passen die in der Uhrzeitnachricht hinterlegte Uhrzeit entsprechend dieser erfaßten, ersten Verzögerungszeit an.
Für den Fall, daß der Netzwerkteilnehmer in einer Empfangsbetriebsart arbeitet, erfassen diese Mittel eine zweite Verzögerungszeit vom Zeitpunkt des Empfangs der Uhrzeitnachricht bis zum Zeitpunkt der Verarbeitung dieser Uhrzeitnachricht und passen die in der Uhrzeitnachricht hinterlegte Uhrzeit entsprechend dieser erfaßten, zweiten Verzögerungszeit an.

Dadurch ist sichergestellt, daß die in der Uhrzeitnachricht hinterlegte Uhrzeit zum Sendezeitpunkt der Uhrzeitnachricht bzw. daß die im Empfänger weiterzuverarbeitende Uhrzeit zum Zeitpunkt der Weiterverarbeitung auch die korrekte Uhrzeit ist.

In Ausgestaltungen der Erfindung gemäß den Merkmalen des Anspruchs 2 bzw. 3 versehen die Mittel in der Sendebetriebsart die zu sendende Uhrzeitnachricht mit einer Kennung bzw. werten in einer Empfangsbetriebsart diese Kennung aus, welche einem in der Empfangsbetriebsart arbeitenden Netzwerkteilnehmer anzeigt, ob die in der Uhrzeitnachricht hinterlegte Uhrzeit angepaßt ist. Dadurch kann der empfangende Netzwerkteilnehmer entsprechende Maßnahmen einleiten, z. B. derart, daß eine nicht angepaßte Uhrzeit einer Uhrzeitnachricht nicht weiterverarbeitet wird.

Anhand der Zeichnung, in der ein Ausführungsbeispiel der Erfindung veranschaulicht ist, werden im folgenden die Erfindung, deren Ausgestaltungen sowie Vorteile näher erläutert.

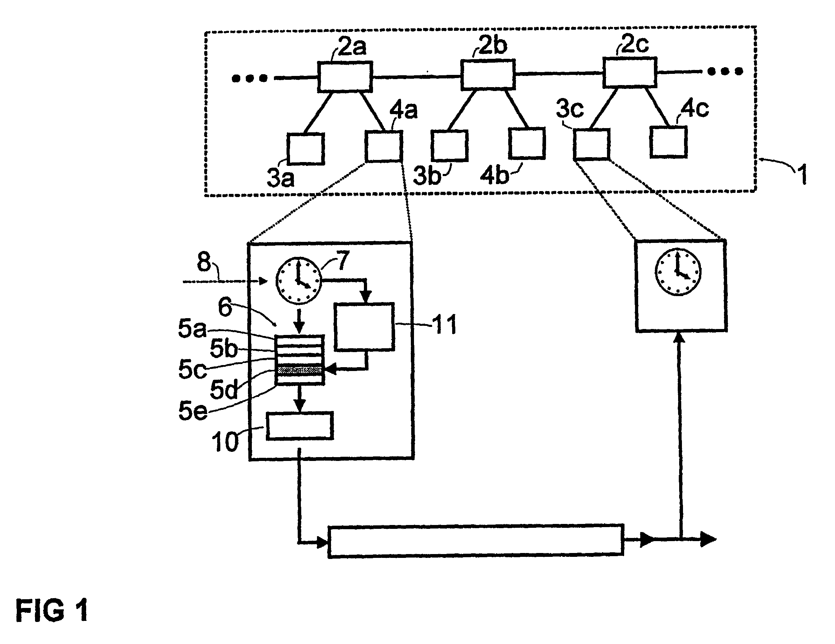

Es zeigen
Figur 1 bis Figur 3 Prinzipdarstellungen eines Netzwerkes.

In Figur 1 ist mit 1 ein Netzwerk, z. B. ein sogenanntes Local Area Network (LAN), bezeichnet. An dieses Netzwerk 1 sind mehrere Netzwerkteilnehmer 2a, 2b, 2c, ... anschließbar, welche jeweils einen Empfänger 3a, 3b, 3c, ... und einen Sender 4a, 4b, 4c, ... aufweisen. Im vorliegenden Beispiel ist angenommen, daß dem Empfänger 3c des Netzwerkteilnehmers 2c Nachrichten 5a, 5b, 5c, 5d, 5e einer Nachrichtenschlange 6 durch den Sender 4a des Netzwerkteilnehmers 2a zu übertragen sind, von denen die Nachricht 5d eine Uhrzeitnachricht ist. In dieser Uhrzeitnachricht 5d ist die Uhrzeit eines Timers 7 des Netzwerkteilnehmers 2a hinterlegt, der durch ein Signal 8 extern synchronisierbar ist, wobei mit der zu einem Eintragungszeitpunkt in die Uhrzeitnachricht 5d eingetragenen Uhrzeit ein Timer 9 des Netzwerkteilnehmers 2c zu synchronisieren ist. Dadurch, daß ein Netzwerkcontroller 10 des Senders 4a die Nachrichten 5a, 5b, 5c, 5d, 5e entsprechend ihrer zeitlichen Hinterlegung in der Nachrichtenschlange 6 dem Empfänger 3b überträgt, weicht die in der Uhrzeitnachricht 5d eingetragene Uhrzeit von der tatsächlichen Uhrzeit zum Sendebeginn ab. Im vorliegenden Beispiel verstreichen vom Zeitpunkt des Eintrags der Uhrzeit in die Uhrzeitnachricht 5d bis zum Zeitpunkt der Übertragung dieser Uhrzeitnachricht 5d zum Empfänger 3c durch den Netzwerkcontroller 10 fünf Verarbeitungszyklen, wodurch die in der Uhrzeitnachricht 5d hinterlegte Uhrzeit um diese Verzögerungszeit von fünf Verarbeitungszyklen zu korrigieren ist. Dabei ist angenommen, daß zu jedem Verarbeitungszyklus der Netzwerkcontroller 10 eine Nachricht 5a, 5b, ... dem Empfänger 3c überträgt. Die Erfassung der Verzögerungszeit und die Anpassung der Uhrzeit entsprechend dieser Verzögerungszeit erfolgt durch Erfassungsund Anpassungsmittel 11 des Senders 4a. Diesen Mitteln 11 wird die Uhrzeit zum Zeitpunkt des Eintrags in die Uhrzeitnachricht 5d zugeführt und die Mittel 11 erfassen zunächst die Verzögerungszeit in Form der Anzahl der Verarbeitungstakte bis zum Sendezeitpunkt der Uhrzeitnachricht 5d und passen schließlich die Uhrzeit in der Uhrzeitnachricht 5d entsprechend der Verzögerungszeit an.

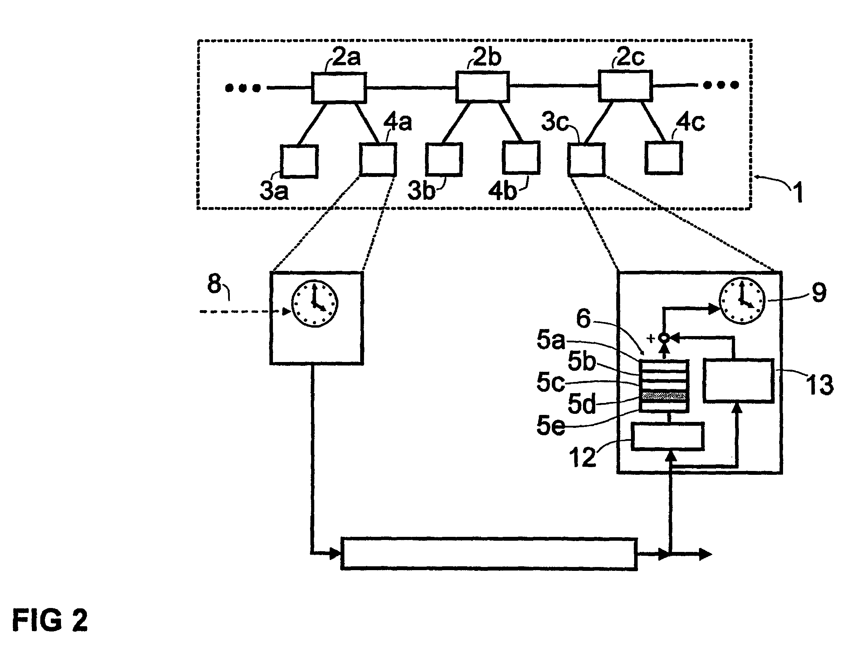

Im folgenden wird auf Figur 2 Bezug genommen, in welcher eine weitere Prinzipdarstellung eines Netzwerkes dargestellt ist. Die in den Figuren 1 und 2 gleichen Teile sind mit gleichen Bezugszeichen versehen. Der Sender 4a des Teilnehmers 2a überträgt einem Netzwerkcontroller 12 und Erfassungs- und Anpassungsmitteln 13 des Empfängers 3c des Teilnehmers 2c die Nachrichten 5a, ... der Nachrichtenschlange 6. Diese Erfassungs- und Anpassungsmittel 13 decodieren die Nachrichten 5a, 5b, ..., erkennen die Uhrzeitnachricht und erfassen die Anzahl der Verarbeitungszyklen, welche vom Zeitpunkt des Eintreffens der Uhrzeitnachricht 5d bis zum Zeitpunkt der Weiterleitung der Uhrzeitnachricht 5d zum Timer 9 erforderlich ist. Entsprechend dieser Anzahl Verarbeitungszyklen passen die Mittel 13 die Uhrzeit an und tragen diese korrigierte Uhrzeit in die Uhrzeitnachricht 5d ein, wodurch dem Timer 9 eine korrekte Uhrzeit zu seiner Synchronisation zugeführt wird.

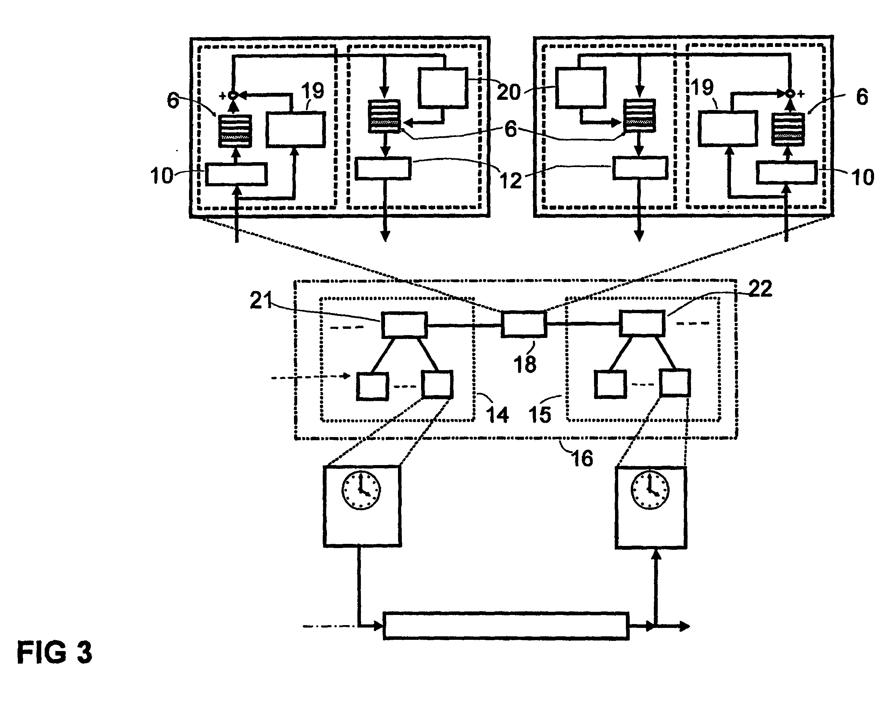

Figur 3 zeigt einen aus zwei Netzwerken 14, 15 gebildeten Netzwerkverbund 16. Ein Netzwerkteilnehmer 18, z. B. ein Netzwerkteilnehmer in Form eines sogenannten "Gateways", "Routers", "Relays" oder einer sogenannten "Bridge", bildet den Netzübergang und ermöglicht die Verbindung der beiden Netzwerke 14, 15. Dieser Netzwerkteilnehmer 18 weist Erfassungs- und Anpassungsmittel 19, 20 auf, von denen für den Fall, daß ein Teilnehmer 21 des Netzwerkes 14 eine Uhrzeitnachricht den Teilnehmern 22 des Netzwerkes 15 überträgt, die Erfassungs- und Anpassungsmittel 19 die vom Teilnehmer 21 zu empfangende Uhrzeit und die Erfassungs- und Anpassungsmittel 20 die dem Teilnehmer 22 zu sendende Uhrzeit in der Uhrzeitnachricht anpassen. Für den Fall, daß der Teilnehmer 22 des Netzwerkes 15 eine Uhrzeitnachricht dem Teilnehmer 21 des Netzwerkes 14 überträgt, passen die Erfassungs- und Anpassungsmittel 19 die vom Teilnehmer 22 zu empfangende Uhrzeit und die Erfassungs- und Anpassungsmittel 20 die dem Teilnehmer 21 zu sendende Uhrzeit in der Uhrzeitnachricht an.

## Patentansprüche

1. Netzwerkteilnehmer, der mit einem weiteren Netzwerkteilnehmer verbindbar ist,
- wobei in einer Sendebetriebsart der Netzwerkteilnehmer (2a, 2b, 2c, ...) dem weiteren Netzwerkteilnehmer (2a, ...) Telegramme zuführt und in einer Empfangsbetriebsart der Netzwerkteilnehmer (2a, 2b, ...) von dem weiteren Netzwerkteilnehmer Telegramme empfängt und
- wobei die Telegramme in einer Nachrichtenschlange (6) Nachrichten (5a, 5b, ...) gleicher Nachrichtenlänge aufweisen, von denen eine Nachricht eine mit einer Uhrzeit versehene Uhrzeitnachricht (5d) ist,
**dadurch gekennzeichnet, daß**
- der Netzwerkteilnehmer (2a, 2b, ...) mit Mitteln (11) versehen ist, welche in der Sendebetriebsart eine erste Verzögerungszeit vom Zeitpunkt des Eintrags der Uhrzeitnachricht (5d) in die Nachrichtenschlange bis zum Zeitpunkt des Sendebeginns dieser Uhrzeitnachricht erfassen und die Uhrzeit dieser Uhrzeitnachricht (5d) entsprechend dieser erfaßten, ersten Verzögerungszeit anpassen, und/oder
- der Netzwerkteilnehmer (2a, 2b, ...) mit Mitteln (13) versehen ist, welche in der Empfangsbetriebsart eine zweite Verzögerungszeit vom Zeitpunkt des Empfangs der Uhrzeitnachricht (5d) bis zum Zeitpunkt der Verarbeitung dieser Uhrzeitnachricht (5d) erfassen und die Uhrzeit dieser Uhrzeitnachricht (5d) entsprechend dieser erfaßten, zweiten Verzögerungszeit anpassen.

2. Netzwerkteilnehmer nach Anspruch 1, **dadurch gekennzeichnet, daß** in der Sendebetriebsart die Mittel (11) die zu sendende Uhrzeitnachricht mit einer Kennung versehen, welche einem in der Empfangsbetriebsart arbeitenden Netzwerkteilnehmer anzeigt, ob die in der Uhrzeitnachricht (5d) hinterlegte Uhrzeit angepaßt ist.

3. Netzwerkteilnehmer nach Anspruch 1, **dadurch gekennzeichnet, daß** die Mittel (13) in der Empfangsbetriebsart eine in der Uhrzeitnachricht (5d) hinterlegte Kennung auswerten, welche anzeigt, ob die in der gesendeten Uhrzeitnachricht hinterlegte Uhrzeit angepaßt ist.

4. Netzwerkteilnehmer nach Anspruch 3, **dadurch gekennzeichnet, daß** die Mittel in der Empfangsbetriebsart die nicht angepaßte Uhrzeit einer Uhrzeitnachricht nicht weiterverarbeiten.

## Claims

1. Network subscriber station, which can be connected to another network subscriber station,
- in which in a transmission operating mode, the network subscriber station (2a, 2b, 2c, ...) feeds telegrams to the other network subscriber station (2a, ...), and in a reception operating mode, the network subscriber station (2a, 2b, ...) receives telegrams from the other network subscriber station and
- in which the telegrams in a message queue (6) have messages (5a, 5b, ...) of the same message length, and one of the messages is a time of day message (5d) with the time of day,
**characterised in that**
- the network subscriber station (2a, 2b, ...) has means (11), which in the transmission operating mode capture a first delay time from the time at which the time of day message (5d) is put into the message queue to the time at which transmission of this time of day message begins, and adjust the time of day of this time of day message (5d) according to this captured first delay time,
- the network subscriber station (2a, 2b, ...) has means (13) which in the reception operating mode capture a second delay time from the time at which the time of day message (5d) is received to the time at which this time of day message (5d) is processed, and adjust the time of day of this time of day message (5d) according to this captured second delay time.

2. Network subscriber station according to Claim 1,
**characterised in that** in the transmission operating mode the means (11) provide the time of day message to be transmitted with a code, which indicates to a network subscriber station which is working in the reception operating mode whether the time of day which is held in the time of day message (5d) has been adjusted.

3. Network subscriber station according to Claim 1,
**characterised in that** in the reception operating mode the means (13) analyse a code which is held in the time of day message (5d), and indicates whether the time of day which is held in the transmitted time of day message has been adjusted.

4. Network subscriber station according to Claim 3,
**characterised in that** the means in the reception operating mode do not further process an unadjusted time of day of a time of day message.

## Revendications

1. Abonné de réseau, qui peut être relié à un autre abonné de réseau,
- selon lequel, dans un mode de fonctionnement en émission, l'abonné de réseau (2a, 2b, 2c, ...) envoie des télégrammes à l'autre abonné de réseau (2a, ...) et, dans un mode de fonctionnement en réception, l'abonné de réseau (2a, 2b, ...) reçoit des télégrammes de l'autre abonné de réseau et
- selon lequel les télégrammes comportent des informations (5a, 5b, ...) de même longueur d'information dans une série d'informations (6), l'une de ces informations étant une information horaire (5d) munie d'une heure,
**caractérisé par le fait que**
- l'abonné de réseau (2a, 2b, ...) est muni de moyens (11) qui, dans le mode de fonctionnement en émission, détectent un premier retard entre l'instant de l'enregistrement de l'information horaire (5d) dans la série d'informations et l'instant du début d'émission de cette information horaire et adaptent l'heure de cette information horaire (5d) en fonction de ce premier retard détecté, et/ou
- l'abonné de réseau (2a, 2b, ...) comporte des moyens (13) qui, dans le mode de fonctionnement en réception, détectent un deuxième retard entre l'instant de la réception de l'information horaire (5d) et l'instant du traitement de cette information horaire (5d) et adaptent l'heure de cette information horaire (5d) en fonction de ce deuxième retard détecté.

2. Abonné de réseau selon la revendication 1, **caractérisé par le fait que**, dans le mode de fonctionnement en émission, les moyens (11) munissent l'information horaire à émettre d'une marque qui indique à un abonné de réseau travaillant dans le mode de fonctionnement en réception si l'heure mémorisée dans l'information horaire (5d) est adaptée.

3. Abonné de réseau selon la revendication 1, **caractérisé par le fait que** les moyens (13) dans le mode de fonctionnement en réception évaluent une marque qui est mémorisée dans l'information horaire (5d) et qui indique si l'heure mémorisée dans l'information horaire émise est adaptée.

4. Abonné de réseau selon la revendication 3, **caractérisé par le fait que** les moyens dans le mode de fonctionnement en réception ne traitent pas l'heure non adaptée d'une information horaire.
